# EUROPÄISCHE PATENTSCHRIFT

(11) **EP 1 538 054 B1**
(45) Veröffentlichungstag und Bekanntmachung des Hinweises auf die Patenterteilung: **14.11.2007**
(21) Anmeldenummer: 04028843.3
(22) Anmeldetag: 06.12.2004
(51) Int. Cl.: B60T 17/18, B60T 13/26, B60T 13/04, B60T 13/10, B60T 17/08

(54) **Bremsanlage in einem Fahrzeug**
Vehicle brake system
Système de freinage pour véhicule

(30) Priorität: 04.12.2003 DE 10356672
(43) Veröffentlichungstag der Anmeldung: 08.06.2005
(73) Patentinhaber: KNORR-BREMSE SYSTEME FÜR NUTZFAHRZEUGE GMBH, 80809 München (DE)
(72) Erfinder: Merza, Valer, 2000 Szentendre (HU); Szabo, Gergely, 1125 Budapest (HU)
(74) Vertreter: Schönmann, Kurt

(56) Entgegenhaltungen:
- GB-A- 1 115 267
- GB-A- 1 210 394
- GB-A- 1 416 400
- US-A- 3 837 361
- US-A- 3 869 177
- US-A- 3 880 473
- US-A- 4 456 311
- US-A- 5 370 449

## Beschreibung

Die Erfindung betrifft eine Bremsanlage in einem Fahrzeug gemäß dem Oberbegriff von Anspruch 1.

Aus der DE 694 22 311 T2 ist eine fluidbetätigte Bremsstellvorrichtung für ein Kraftfahrzeug, wie beispielsweise einen Bus, einen Lastkraftwagen oder dergleichen, bekannt. In einem derartigen Fahrzeug ist üblicherweise eine Anordnung aus Bremsbacke und Bremstrommel vorgesehen, die mittels einer Betätigungsanordnung betätigt wird. Bekannte Luftbremsstellvorrichtungen haben sowohl eine Betriebsbremsstellvorrichtung zum Betätigen der Bremsen unter normalen Fahrbedingungen durch den Einsatz der Druckluft als auch eine Sicherheits- oder Federbremsstellvorrichtung zum Betätigen der Bremsen, wenn die Druckluft freigesetzt wird. Die Sicherheitsbremsstellvorrichtung enthält eine starke Druckfeder, welche die Betätigung der Bremse erzwingt, wenn Luft freigesetzt wird. Diese Stellvorrichtung wird häufig als Federbremse bezeichnet. Üblicherweise werden die Federbremsstellvorrichtung und die Betriebsbremsstellvorrichtung hinter einander angeordnet.

Die Betriebsbremsstellvorrichtung ist üblicherweise durch eine Membran in zwei Kammern unterteilt. Ein Niederdrücken des Bremspedals während des Fahrbetriebs leitet Druckluft in eine der Kammern der Betriebsbremsstellvorrichtung. Hierbei verursacht die Druckluft, indem sie gegen die Membran wirkt, das Ausfahren einer Bremsschubstange in die andere Kammer und das Betätigen der Bremsen mit einer Angriffskraft, die proportional zum Luftdruck in der Betriebsbremsstellvorrichtung ist.

Bei Tandem-Stellvorrichtungsanordnungen, auf welche sich die vorliegende Erfindung hauptsächlich bezieht, erstreckt sich üblicherweise eine Federbremsschubstange aus einer Kammer in dem Federbremsabschnitt durch eine Öffnung in der Wand, welche die Federbremsstellvorrichtung von der Betriebsstellvorrichtung trennt, und hinein in eine Kammer im Betriebsbremsabschnitt. Auch die Federbremsstellvorrichtung ist üblicherweise in zwei Kammern unterteilt, die von einander durch eine Gummimembran und eine Druckplatte getrennt werden, wobei die Feder in der einen Kammer zwischen einer Stirnwand des Federbremsgehäuses und einer Druckplatte wirkt. Wenn voller Druck auf die andere Kammer wirkt, drückt ein gegen die Membran und die Druckplatte wirkender Luftdruck die Feder zusammen.

Bei einem Luftdruckverlust oder einem vorsätzlichen Ausstoß von Luft im Leitungssystem für die Feststellbremskreise wird die Feststellbremse mechanisch durch die Kraft der Druckfeder aktiviert, die auf die Federbremsbetätigungsstange wirkt, um die Bremsen zu betätigen. Der Federbremsabschnitt dient somit sowohl als Feststellbremse als auch als Sicherheitsbremse.

In der gattungsbildenden US-A-3 880 473 ist eine Bremsanlage eines Anhängerfahrzeugs mit einer Druckluftbremse als Betriebsbremse und einer Federspeicherbremse als Notbremse oder Feststellbremse offenbart, bei welcher im Falle einer Druckluftverlusts während der Fahrt die Federspeicherbremse mit Druckluft aus einem Druckluftvorrat im Anhängerfahrzeug versorgt wird, wodurch zunächst verhindert wird, dass diese zuspannt. Gleichzeitig werden die Druckluftbremsen der Betriebsbremse mit Druckluft zugespannt, welche ebenfalls aus dem Druckluftvorrat stammt. Wenn nach einiger Zeit der Druck im Druckluftvorrat aufgrund unvermeidlicher Undichtigkeiten unter den Lösedruck der Federspeicherbremse sinkt, wird das Nachlassen der Bremswirkung der Druckluftbremse durch ein Einsetzen der Federspeicherbremse kompensiert und das Anhängerfahrzeug mit konstantem Bremsmoment abgebremst. Zur Realisierung dieser Funktionen ist eine komplex aufgebaute Ventileinrichtung vorhanden, welche entsprechend teuer in der Herstellung ist.

Es ist die Aufgabe der Erfindung, zu gewährleisten, dass wenn ein plötzlicher Druckverlust im Leitungssystem des Feststellbremskreises eines mit einem elektronischen Bremssystem (EBS) oder mit einem ABS-Bremssystem ausgestatteten Fahrzeugs festgestellt wird, das Fahrzeug wenigstens über ein mit einer Feder- oder Feststellbremse versehenes Laufrad noch durch das elektronische Bremssystem oder das ABS-Bremssystem gesteuert werden kann. Insbesondere sollen die Mittel zur Umsetzung einfach und kostengünstig sein.

Erfindungsgemäß wird diese Aufgabe durch die Merkmale von Anspruch 1 gelöst.

Die Erfindung basiert auf dem Gedanken, dass das Steuermittel zur Verhinderung eines Blockierzustands auf ein Wechselventil wirkt, von welchem ein Eingang mit einem dem Betriebsbremskreis an nur einer Seite des Fahrzeugs zugeordneten Ausgang des Steuermittels und von welchem ein weiterer Eingang mit dem Feststellbremskreis verbunden ist und dass das Wechselventil so ausgestaltet ist, dass Fluid aus einer Zuführleitung für den Betriebsbremskreis auch dem Feststellbremskreis zuführbar ist, wenn der Druck in dem Feststellbremskreis niedriger als der Druck in dem Betriebsbremskreis ist.

Ein solches Wechselventil stellt ein sehr einfach herzustellendes Bauelement dar, weshalb die Herstellkosten vergleichsweise niedrig sind. Weiterhin ist aufgrund des einfachen Aufbaus von einer für sicherheitsrelevante Bremsen vorteilhafte hohe Zuverlässigkeit auszugehen.

Vorteilhafte Weiterbildungen ergeben sich aus den Unteransprüchen, der Beschreibung und den Zeichnungen.

Von Vorteil ist insbesondere eine Ausführung der Bremsanlage, bei der das Steuermittel ein erstes Mittel zum Messen des Drucks in dem mindestens einen Betriebsbremskreis, ein zweites Mittel zum Messen des Drucks in dem Feststellbremskreis sowie ein Vergleichsmittel zum Vergleichen der Drücke umfasst, das, wenn der Druck in dem Betriebsbremskreis höher als der Druck in dem Feststellbremskreis ist, einen Druck in allen Feststellbremskreisen erzeugt, durch den diese gegen die rücktreibende Kraft der federnden Elemente oder der federnden Elemente entlastbar sind, damit ein Blockieren mindestens eines der Laufräder vermieden wird.

Von Vorteil ist es außerdem, wenn der Ausgang des Wechselventils mit beiden Fahrzeugseiten verbunden ist.

Eine weitere vorteilhafte Ausführung der Bremsanlage besteht darin, dass Mittel zum Erhöhen des Drucks in dem Betriebsbremskreis auf einen Wert vorhanden sind, der höher ist als der Druck zum Auslösen der Federn in dem Feststellbremskreis, wodurch der Feststellbremskreis geöffnet wird.

Vorteilhaft ist weiterhin eine Bremsanlage, bei der über das Wechselventil bei Absinken des Drucks in mindestens einem der Feststellbremskreise ein Bremsfluid aus mindestens einem Fluid-Druckspeicher für einen der Betriebsbremskreise allen Feststellbremskreisen zugeführt wird, so dass in diesen wieder ein Druck herstellbar ist, der ausreicht, um die Federn wieder zu lösen.

Die Information über die Geschwindigkeit der Laufräder wird durch einen an mindestens einem Laufrad angebrachten Geschwindigkeitssensor oder durch zwei an zwei Laufrädern derselben Achse angebrachte Geschwindigkeitssensoren gemessen.

Die Erfindung ist sowohl an einem Kraftfahrzeug mit eigenem Antrieb, d. h. an einer Zugmaschine, als auch an einem Anhänger ohne eigenen Antrieb einsetzbar.

Nachstehend wird die Erfindung in Ausführungsbeispielen anhand der Figuren näher erläutert. Es zeigen:
- Fig. 1: eine schematische Ansicht einer Bremsanordnung mit einem Betriebsbremskreis und einem Feststellbremskreis am Beispiel eines Anhängers für ein Kraftfahrzeug und

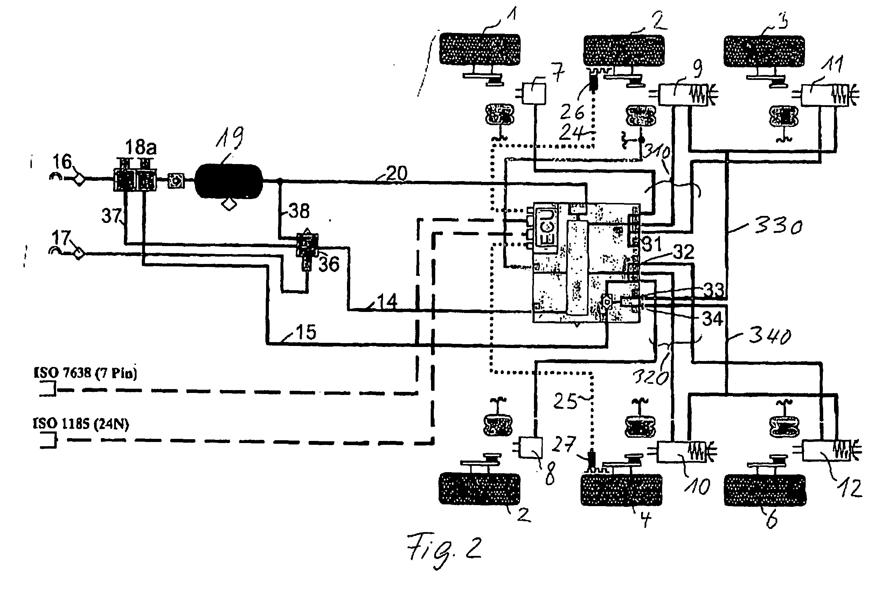

- Fig. 2: eine weitere schematische Ansicht einer Bremsanordnung eines Anhängers, in der zusätzlich ein Bremsventil angeordnet ist.

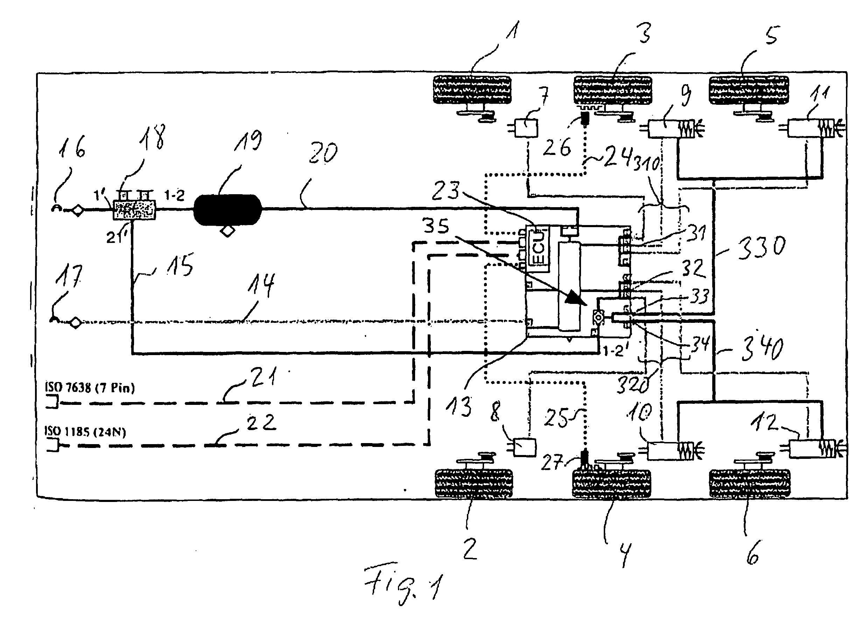

In Fig. 1 sind sechs Laufräder 1 bis 6 an einem Anhänger eines Kraftfahrzeugs dargestellt, denen jeweils ein Bremszylinder 7 bis 12 zugeordnet ist. Dabei sind die Bremszylinder 9 bis 12 an der mittleren und an der hinteren Radachse des Fahrzeugs Tandem- oder Doppelbremszylinder, die zusammen an einen einzigen Bremskreis einer Feststellbremse als auch zusammen an einen Bremskreis einer einzigen Betriebsbremse angeschlossen sind, an den zusätzlich auch die Bremszylinder 7, 8 angeschlossen sind.

Der Anhänger ist mit einem elektronischen Steuermodul 13 ausgestattet, das über Druckleitungen 14, 15 mit Kupplungsköpfen 16, 17 zum Anschluss an eine Zugmaschine verbunden ist. Die Druckleitung 15 ist über ein Ventil 18 mit dem Kupplungskopf 16 verbunden und dient zur Einstellung des Drucks in dem Feststellbremskreis. Die Druckleitung 14 ist mit dem Kupplungskopf 17 verbunden und dient zur Einstellung des Betriebsbremskreises. Das Ventil 18 (Park & Shunt Valve) ist über einen Druckluftvorrat oder Druckspeicher 19 und eine weitere Druckleitung 20 mit dem Steuermodul 13 verbunden.

Das Steuermodul 13 ist außerdem über Steuerleitungen 21, 22 mit der Zugmaschine verbunden. Die Steuerleitungen 21, 22 sind an eine elektronische Steuereinheit 23 innerhalb des Steuermoduls 13 angeschlossen. Die Steuereinheit 23 ist außerdem über Leitungen 24, 25 mit Geschwindigkeitssensoren 26, 27 verbunden, die insbesondere auch melden, wenn die Laufräder 3, 4 blockieren.

Druckausgänge 31, 32 an dem Steuermodul 13 sind jeweils über einen Kanal 310 bzw. 320 mit den Bremszylindern des Betriebsbremskreises für die Laufräder 1 bis 6 verbunden. Druckausgänge 33, 34 sind jeweils über einen Kanal 330 bzw. 340 mit den Bremszylindern des Feststell- oder Federbremskreises für die Laufräder 3 bis 6 verbunden. Der Druckausgang 32 und die Druckausgänge 33 bis 34 sind mit einem Ventil 35 zum Verhindern des Blockierens verbunden.

Für den Fall, dass ein Druckabfall am Eingang 1' des Ventils 18 (am Kupplungskopf 16') detektiert wird, fällt der Druck an dem Ausgang 21' des Ventils 18 auf Null oder einen anderen sehr niedrigen Wert. Ohne Bremsdruck an dem Ausgang 32 des Moduls 13 werden alle Aktuatoren für den Federbremskreis über die Ausgänge 33, 34 druckfrei gesetzt, so dass jedes der Laufräder 3, 4, 5 und 6, das mit einem Aktuator für den Federbremskreis ausgestattet ist, durch die Federbremse gebremst wird. Bedingt durch die Kraft der Sprungfedern und durch die Reibung auf der Straßenoberfläche werden dadurch die Laufräder 3 bis 6 blockiert. Dabei ist das ABS- oder EBS-Bremssystem nicht imstande, die Aktuatoren für die Sprungfedern zu steuern, so dass der Anhänger seine Stabilität verliert.

Das Ventil 35 (Double Check Valve = Wechselventil) ist nur mit dem Ausgang 32 auf der linken Fahrzeugseite verbunden und steuert über die beiden Ausgänge 33, 34 die Kanäle 330, 340 des Federbremskreises. Wenn daher der Druck auf den Betriebsbremskreis auf der linken Fahrzeugseite (Ausgang 32 des Moduls 13) höher ist als der Druck, der erforderlich ist, um alle Federn in den Bremszylindern des Federbremskreises zu lösen, werden alle Federn des Federbremskreises gelöst. Dies gilt selbst dann, wenn der Druck an einem Ausgang 1-2' des Moduls Null ist.

Wenn alle Laufräder 3, 4, 5 und 6 oder wenn nur die Laufräder 3, 4, an denen die Geschwindigkeit detektiert wird, blockiert sind, wobei die Kanäle 310, 320 des Betriebsbremskreises über die Ausgänge 31, 32 mit dem Modul 13 verbunden sind, wird dies als totaler Blockiervorgang angesehen (red-line failure).

Für den Fall, dass ein Blockieren, d. h. ein Druckluftverlust oder ein Absinken des Drucks in wenigstens einem Kanal 330, 340 des Feststellbremskreises, detektiert wird, wird in dem Betriebsbremskreis der Druck in dem Kanal 320 für die Laufräder 4, 6 auf einen Wert heraufgesetzt, der höher ist als der Druck, der zum Lösen der Feststellbremsen erforderlich ist, also auf einen Wert oberhalb eines Werts zwischen 5 und 6.10⁵ Pa.

Das ABS-Bremssystem für die Laufräder 4, 6 wird vorzugsweise abgeschaltet, um einen Druckabfall an dem Ausgang 32 zu verhindern. Andernfalls würden die Laufräder 4, 6 auf der anderen Fahrzeugseite durch die Feststellbremse wieder blockiert. Es wird jedoch ein voller Bremsdruck innerhalb des Betriebsbremskreises auf dieser wie auf der anderen Seite des Fahrzeugs aufgebracht, jedoch wird wenigstens auf der Seite der Laufräder 3, 5 die Funktion des ABS-Bremssystems aufrecht erhalten, indem der Druck, soweit notwendig, reduziert wird. Die Seitenführungskraft auf die durch das ABS-Bremssystem kontrollierte Seite reicht in den meisten Fällen aus, um den Anhänger oder die Kombination aus Anhänger und Zugmaschine stabil zu halten.

Durch die oben beschriebene Vorgehensweise wird eine Möglichkeit geschaffen, um die Fahrzeugstabilität auch im Fall des automatischen Eingreifens des Federbremssystems bei einem Druckabfall noch aufrecht zu erhalten. Bei dieser Möglichkeit kommt das Modul 13 zum Einsatz, da in ihm über die Leitungen 24, 25 die Daten über die Geschwindigkeit der Laufräder 3, 4 und damit die Fahrzeuggeschwindigkeit ebenso wie die Daten über die Drücke in den Druckleitungen 14, 20 sowie von den Ausgängen 31 bis 32 zu den Bremskreisen zur Verfügung stehen. Es ist möglich, jederzeit auf der linken Seite des Fahrzeugs einen Betriebsbremsdruck zur Verfügung zu stellen und dadurch die Blockierwirkung des Federbremssystems auf beiden Fahrzeugseiten auf zuheben, wenigstens einseitig auf einer Fahrzeugseite.

Gemäß der Erfindung wird ein Bremssystem geschaffen, bei dem automatisch während des Fahrbetriebs ein Druck generiert wird, um die Wirkung der Federbremse außer Funktion zu setzen, indem die Federspeicher unter Druck gesetzt werden. Dadurch wird der Federbremskreis außer Betrieb gesetzt, während die Betriebsbremse zumindestens der linken Seite unter Druck steht.
Durch die erfindungsgemäße Anordnung hält auch ein ABS- oder EBS-Bremssystem seine Stabilität aufrecht, weil es den Druck in dem Bremskreis für die Betriebsbremse im Fall blockierender Laufräder herabsetzen kann.

Die Aussagen, die oberhalb in Hinblick auf die linke Fahrzeugseite getroffen wurden, lassen sich auch in spiegelsymmetrischer Anordnung in äquivalenter Weise auf die andere Fahrzeugseite übertragen. Auch wenn die Erfindung in diesem Ausführungsbeispiel anhand des Einsatzes von Druckluft geschildert wurde, versteht es sich, dass auch jedes andere, für eine Bremsanlage geeignete Fluid zum Einsatz kommen kann.

Im einzelnen hat die Bremsanlage die folgende Funktionsweise: Im Falle eines Druckabfalls an dem Kupplungskopf 16 kommt es über das Ventil 18 auch zu einem Druckabfall und zu einer Entlüftung der Leitung 15. Diese entlüftet über das Wechselventil 35 auch die über die Ausgänge 33, 34 mit dem Wechselventil 35 verbundenen Kanäle 340, 350 des Federbremskreises, so dass dieser aktiviert ist und die Laufräder 3 bis 6 gebremst sind (Notbremsfunktion).

Das Wechselventil 35 hat die Eigenschaft, dass es den größeren von den beiden auf der Leitung 15 und an dem Ausgang 32 des Kanals 320 anliegenden Druck weiterleitet.

Wenn die Notbremsfunktion nicht aktiviert ist, liegt damit auf dem Kanal 320 ein Druck von Null an und auf der Leitung 15 liegt ebenso wie auf den Leitungen 330, 340 ein hoher Druck an. Wenn jedoch die Notbremsfunktion aktiviert ist, wird die Leitung 15 entlüftet und damit auch über das Wechselventil 35 die Leitungen 330, 340, so dass die Federbremse aktiviert wird und die Laufräder 3, 4, 5 und 6 gebremst werden und blockieren.

Durch die Sensoren 26, 27 wird das Blockieren der Laufräder 3 und 4 erkannt. Daraufhin wird durch die Steuereinheit 23, d. h. das EBS-Modul, veranlasst, dass über den mit dem Wechselventil verbundenen Ausgang 32 der Kanal 320 mittels von dem Druckluftvorrat 19 über die Leitung 20 zugeführte Druckluft belüftet wird, so dass die Betriebsbremsen 8, 10,12 der Betriebsbremseinrichtung gebremst werden.

Da im vorliegenden Fall auf der Leitung 15 ein Druck von Null, d. h. kein Überdruck, anliegt, während der Kanal 320 unter Druck steht, gibt das Wechselventil 35 diesen Druck auch über die Ausgänge 33, 34 auf die Kanäle 330, 340 weiter. Damit werden alle Federbremsen des Federbremskreises deaktiviert. Parallel dazu werden die Betriebsbremsen 8, 10, 12 aktiviert. Unabhängig davon können die Betriebsbremsen 7, 9, 11 direkt von dem Druckluftvorrat 19 belüftet werden. Die ABS-Funktion der Steuereinheit 23 ist fähig, den Druck so zu begrenzen, dass die Laufräder 1, 3, 5 nicht blockiert werden.

## Patentansprüche

1. Bremsanlage in einem Fahrzeug mit einer Betriebsbremseinrichtung mit mindestens einem Betriebsbremskreis für mindestens eines der Laufräder (1 bis 6) an mindestens einer Radachse, wobei der Betriebsbremskreis durch ein erstes, unter einem ersten Druck stehendes Fluid belastbar ist, und mit einer Feststellbremseinrichtung mit mindestens einem Feststellbremskreis für jeweils eines der Laufräder (3 bis 6) der mindestens einen Radachse, wobei der Feststellbremskreis durch ein zweites, unter einem zweiten Druck stehendes Fluid gegen die rücktreibende Kraft mindestens eines federnden Elements entlastbar ist, wobei ein Steuermittel (13) zum Verhindern der Blockierung mindestens eines der Laufräder (3 bis 6) infolge eines Druckabfalls in dem Feststellbremskreis während des Fahrbetriebs des Kraftfahrzeugs vorhanden ist, **dadurch gekennzeichnet, dass** das Steuermittel (13) zur Verhinderung eines Blockierzustands auf ein Wechselventil (35) wirkt, von welchem ein Eingang mit einem dem Betriebsbremskreis an nur einer Seite des Fahrzeugs zugeordneten Ausgang (32) des Steuermittels (13) und von welchem ein weiterer Eingang mit dem Feststellbremskreis verbunden ist und dass das Wechselventil (35) so ausgestaltet ist, dass Fluid aus einer Zuführleitung für den Betriebsbremskreis auch dem Feststellbremskreis zuführbar ist, wenn der Druck in dem Feststellbremskreis niedriger als der Druck in dem Betriebsbremskreis ist.

2. Bremsanlage nach Anspruch 1, **dadurch gekennzeichnet, dass** ein Ausgang des Wechselventils (35) wenigstens mit allen dem Feststellbremskreis zugeordneten Ausgängen (33, 34) des Steuermittels (13) verbunden ist.

3. Bremsanlage nach Anspruch 2, **dadurch gekennzeichnet, dass** Mittel (13) zum Erhöhen des Drucks in dem Betriebsbremskreis auf einen Wert vorhanden sind, der höher ist als der Druck zum Auslösen der Federn in dem Feststellbremskreis, wodurch der Feststellbremskreis geöffnet wird.

4. Bremsanlage nach Anspruch 2 oder 3, **dadurch gekennzeichnet, dass** über das Wechselventil (35) bei Absinken des Drucks, insbesondere bei Unterschreiten des Drucks des Betriebsbremskreises, in dem Feststellbremskreis Bremsfluid aus mindestens einem Fluid-Druckspeicher (19) zuführbar wird, so dass in diesem wieder ein Druck herstellbar ist, der ausreicht, um die Federn wieder zu lösen.

5. Bremsanlage nach Anspruch 4, **dadurch gekennzeichnet, dass** die Geschwindigkeit der Laufräder durch einen an mindestens einem Laufrad (3, 4) angebrachten Geschwindigkeitssensor (25, 26) oder durch zwei an zwei Laufrädern (3, 4) derselben Achse angebrachte Geschwindigkeitssensoren (26, 27) messbar ist.

6. Bremsanlage nach Anspruch 5, **dadurch gekennzeichnet, dass** nach dem Erkennen des Blockierens der Laufräder (3 bis 6) durch die Sensoren (26, 27) durch eine Steuereinheit (23) veranlasst wird, dass über den mit dem Wechselventil (35) verbundenen Ausgang (32) des Steuermittels (13) ein Kanal (320) des Betriebsbremskreises mittels von dem Fluid-Druckspeicher (19) über eine Leitung (20) zugeführtem Fluid mit Druck beaufschlagt wird, so dass die Betriebsbremsen (8, 10, 12) der Betriebsbremseinrichtung gebremst werden.

7. Bremsanlage nach Anspruch 6, **dadurch gekennzeichnet, dass** wenn in einer Leitung (15) des Feststellbremskreises ein Druck von Null, d. h. kein Überdruck anliegt, während ein Kanal (320) des Betriebsbremskreises unter Druck steht, das Wechselventil (35) diesen Druck über Ausgänge (33, 34) des Steuermittels (13) auf Kanäle (330, 340) des Federbremskreises weiterleitet, um alle Federspeicherbremsen zu deaktivieren, und dass anschließend auch die Kanäle (310, 320) des Betriebsbremskreises von dem Fluid-Druckspeicher (19) mit Druck beaufschlagt werden.

## Claims

1. Vehicle brake system in a vehicle comprising a service brake system including at least one service brake circuit for at least one of the running wheels (1 to 6) on at least one wheel axle, wherein said service brake circuit is adapted to be loaded by a first fluid subjected to a first pressure, and comprising one parking brake system including at least one parking brake circuit for a respective one of said running wheels (3 to 6) on said at least one wheel axle, wherein said parking brake circuit is adapted to be relieved by a second fluid subjected to a second pressure, in opposition to the retroacting force of at least one resilient element, with a control means (13) being provided in said parking brake circuit during the running operation of said motor vehicle for preventing at least one of said running wheels (3 to 6) from blocking as a result of a pressure drop in said parking brake circuit, **characterised in that** said control means (13) for preventing a blocking condition acts upon a shuttle valve (35) having one input connected to an output (32) of said control means(13), which is associated with said service brake circuit on one side only of the vehicle, and having another input connected to said parking brake circuit, and that said shuttle valve (35) is so designed that a fluid may be supplied from a feeder conduit for said service brake circuit also to said parking brake circuit when the pressure in said parking brake circuit is lower than the pressure in said service brake circuit.

2. Brake system according to Claim 1, **characterised in that** one output of said shuttle valve (35) is connected at least to all outputs (33, 34) of said control means(13), which is associated with said parking brake circuit.

3. Brake system according to Claim 2, **characterised in that** means (13) are provided for increasing the pressure in said service brake circuit to a value that is higher than the pressure for triggering the springs in said parking brake circuit, thus opening said parking brake circuit.

4. Brake system according to Claim 2 or 3, **characterised in that** when the pressure drops, specifically when the pressure drops below the pressure of said service brake circuit, some brake fluid may be supplied via said shuttle valve (35) from at least one fluid pressure reservoir (19) such that a pressure may be established again therein which is sufficient to release the springs again.

5. Brake system according to Claim 4, **characterised in that** the speed of said running wheels can be measured by means of a speed sensor mounted on at least one running wheel (3, 4) or by means of two speed sensors (26, 27) mounted on two running wheels (3, 4) on the same axle.

6. Brake system according to Claim 5, **characterised in that** after detection of the blocked condition of said running wheels (3 to 6) by said sensors (26, 27), via the output (32) of said control means (13), which is connected to said shuttle valve (35), a controller (23) causes the pressurisation of a passage (320) of said service brake circuit by means of a fluid supplied from said fluid pressure reservoir (19) via a conduit (20) so that the service brakes (8, 10, 12) of said service brake system are braked.

7. Brake system according to Claim 6, **characterised in that** when a pressure of zero, i.e. no overpressure, is applied in a conduit (15) of said parking brake circuit, whilst a passage (320) of said service brake circuit is pressurised, said shuttle valve (35) passes this pressure on via outputs (33, 34) of said control means (13) to passages (330, 340) of the spring brake circuit in order to deactivate all spring-loaded brakes, and that subsequently all passages (310, 320) of said service brake circuit are pressurised from said fluid pressure reservoir (19).

## Revendications

1. Système de freinage pour véhicules dans un véhicule comprenant un système de freinage de service renfermant au moins un circuit du frein de service pour au moins une des roues de roulement (1 à 6) à au moins un essieu, dans lequel ledit circuit du frein de service est apte à être chargé par un premier fluide soumis à une première pression, et comprenant un système de freinage de stationnement renfermant au moins un circuit du frein de stationnement pour une roue respective parmi lesdites roues de roulement (3 à 6) à au moins un essieu, dans lequel ledit circuit du frein de stationnement est apte à être soulagé moyennant un deuxième fluide soumis à une deuxième pression, en opposition à l'effort rétroactif d'au moins un élément élastique, à un moyen de commande (13) étant présent dans ledit circuit du frein de stationnement au cours de l'opération de marche dudit véhicule automobile afin d'empêcher l'arrêt d'au moins une desdites roues de roulement (3 à 6) en conséquence d'une réduction de pression dans ledit circuit du frein de stationnement, **caractérisé en ce que** ledit moyen de commande (13) à empêcher un état d'arrêt agit sur une soupape à deux voies (35) présentant une entrée reliée à une sortie (32) dudit moyen de commande (13), qui est affectée audit circuit du frein de service d'un seul côté du véhicule, et présentant une autre entrée reliée audit circuit du frein de stationnement, et **en ce que** ladite soupape à deux voies (35) est conçue d'une telle manière, qu'un fluide puisse s'alimenter à partir d'un conduit d'alimentation pour ledit circuit du frein de service aussi vers ledit circuit du frein de stationnement, quand la pression dans ledit circuit du frein de stationnement est inférieure à la pression dans ledit circuit du frein de service.

2. Système de freinage selon la revendication 1, **caractérisé en ce qu'**une sortie de ladite soupape à deux voies (35) est reliée au moins à toutes les sorties (33, 34) dudit moyen de commande(13), qui sont affectées audit circuit du frein de stationnement.

3. Système de freinage selon la revendication 2, **caractérisé en ce que** des moyens (13) sont disposées à augmenter la pression dans ledit circuit du frein de service à une valeur plus haute que la pression à déclencher les ressorts dans ledit circuit du frein de stationnement, en commandant ainsi ledit circuit du frein de stationnement.

4. Système de freinage selon la revendication 2 ou 3, **caractérisé en ce qu'**à une réduction de la pression, en particulier quand la pression se réduit en dessous de la pression dudit circuit du frein de service, un peu du liquide de freins peut être alimenté via ladite soupape à deux voies (35) à partir d'au moins un réservoir de pression du fluide (19) d'une telle façon, qu'une pression puisse s'y établir encore, qui suffit à soulager encore les ressorts.

5. Système de freinage selon la revendication 4, **caractérisé en ce que** la vitesse desdites roues de roulement est mesurable moyennant un détecteur tachymétrique monté à au moins une roue de roulement (3, 4) ou moyennant deux détecteurs tachymétriques (26, 27) montés à deux roues de roulement (3, 4) au même essieu.

6. Système de freinage selon la revendication 5, **caractérisé en ce qu'**après la détection de l'état arrêté desdites roues de roulement (3 to 6) moyennant lesdits détecteurs (26, 27), une unité de commande (23) induit, via la sortie (32) dudit moyen de commande (13), qui est relié à ladite soupape à deux voies (35), la sollicitation en compression d'un conduit (320) dudit circuit du frein de service moyennant d'un fluide alimenté à partir dudit réservoir de pression du fluide (19) via un conduit (20) d'une telle manière, que les freins de service (8, 10, 12) dudit système de freinage de service soient serrés.

7. Système de freinage selon la revendication 6, **caractérisé en ce qu'**à une pression de zéro appliquée dans un conduit (15) dudit circuit du frein de stationnement, c'est-à-dire en un état sans aucune surpression, pendant qu'un passage (320) dudit circuit du frein de service est sollicité en compression, ladite soupape à deux voies (35) transfère cette pression via des sorties (33, 34) dudit moyen de commande (13) aux conduits (330, 340) du circuit du frein à ressort afin de désactiver tous les freins à ressort, et **en ce qu'**essentiellement tous les conduits (310, 320) dudit circuit du frein de service sont sollicités en compression à partir dudit réservoir de pression du fluide (19).
